Europäisches Patentamt

European Patent Office

Office européen des brevets

(19)

(11) Publication number: **0 386 260**

**A1**

(12)

# EUROPEAN PATENT APPLICATION
## published in accordance with Art. 158(3) EPC

(21) Application number: 89909423.9

(22) Date of filing: 16.08.89

(86) International application number:
PCT/JP89/00837

(87) International publication number:
WO 90/02365 (08.03.90 90/06)

(51) Int. Cl.⁵ **G05B 19/04**

(30) Priority: 26.08.88 JP 211957/88

(43) Date of publication of application:
**12.09.90 Bulletin 90/37**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **TANAKA, Kunio**
**5-8-13, Tamagawacho**
**Akishima-shi Tokyo 196(JP)**
Inventor: **INO, Yasuyuki Fanuc Dai-3**
**Bira-karamatsu**
**3527-1, Shibokusa, Oshinomura**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) SEQUENCE PROGRAM EDITING SYSTEM.

(57) A sequence program editing system for editing a ladder diagram by displaying it on a display screen, the ladder diagram including a relay contact, a not relay contact, a coil and a not coil as elements. A cursor is moved to a position designated on the display screen (S1), elements of a number (S2) punched by the operation keys are input (S3) to the regions of the buffer memory successively from a region that corresponds to the cursor position of the buffer memory, and the ladder diagram in which the elements that are input are successively connected is displayed on the display screen (S4). This makes it possible to simplify the operation for inputting a plurality of elements.

start

S 1 — move cursor

S 2 — input elements and number of elements

S 3 — sequentially store

S 4 — display

end

F i g . 1

# DESCRIPTION

## SEQUENCE PROGRAM EDIT SYSTEM

### TECHNICAL FIELD

The present invention relates to a sequence program edit system, and more specifically, to a sequence program edit system by which a sequence program can be edited while observing a ladder diagram displayed at a display unit.

### BACKGROUND ART

Elements such as relay contacts are input, respectively, by moving a cursor to a desired location on a display and depressing function keys corresponding to relay contacts, not-relay contacts, coils, and not-coils.

In a conventional edit system, when a plurality of elements are to be input on one line of a ladder diagram, a cursor must be moved each time an element is input, and thus the editing of a program becomes troublesome and time-consuming.

### DISCLOSURE OF THE INVENTION

Taking the above into consideration, an object of the present invention is to provide a sequence program edit system by which elements of a ladder program can be easily input.

To solve the above problem, in accordance with the present invention, there is provided a sequence program edit system for editing a sequence program by displaying a ladder diagram including elements such as relay contacts, not-relay contacts, coils, and not-coils at a display, the system comprising the steps of moving a cursor to an arbitrary location on the display, inputting specific characters designating the elements and the number of elements through operation keys, sequentially inputting the number of elements to be input to respective regions of a buffer memory from the region of the buffer memory corresponding to the cursor location, and displaying a ladder diagram composed of the respective elements input to the buffer memory and sequentially connected at the display.

Assuming that four relay contacts are to be input after the cursor has been moved to a desired location on the display, a character designating the relay contact, and a number 4, are input through the operation key, and when three not-relay contacts are to be input, a character designating the not relay contact, and a number 3, are input through the operation key. When a coil is to be input, a character designating the coil is input through the operation key, and when a not-coil is to be input, a character designating the not-coil is input through the operation key.

As described above, a number of elements corresponding to the input number are sequentially input to a buffer memory from the regions corresponding to cursor locations, and displayed at the display as a ladder diagram.

### BRIEF DESCRIPTION OF THE DRAWINGS

Figure 1 is a flowchart of a sequence program edit system of an embodiment according to the present invention;

Figure 2 is a block diagram of hardware as an embodiment of the sequence program edit system according to the present invention;

Figure 3 is a diagram illustrating the state of a region corresponding to one display of a display unit of a buffer memory contained in an automatic program creation unit of Figure 2; and

Figure 4 is a diagram illustrating the display at a display unit when displaying a ladder diagram corresponding to the state of the buffer memory of Figure 3.

### BEST MODE OF CARRYING OUT THE INVENTION

An embodiment of the present invention will be described below with reference to drawings.

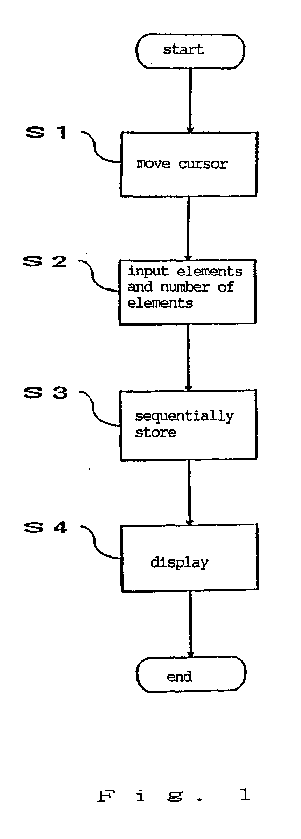

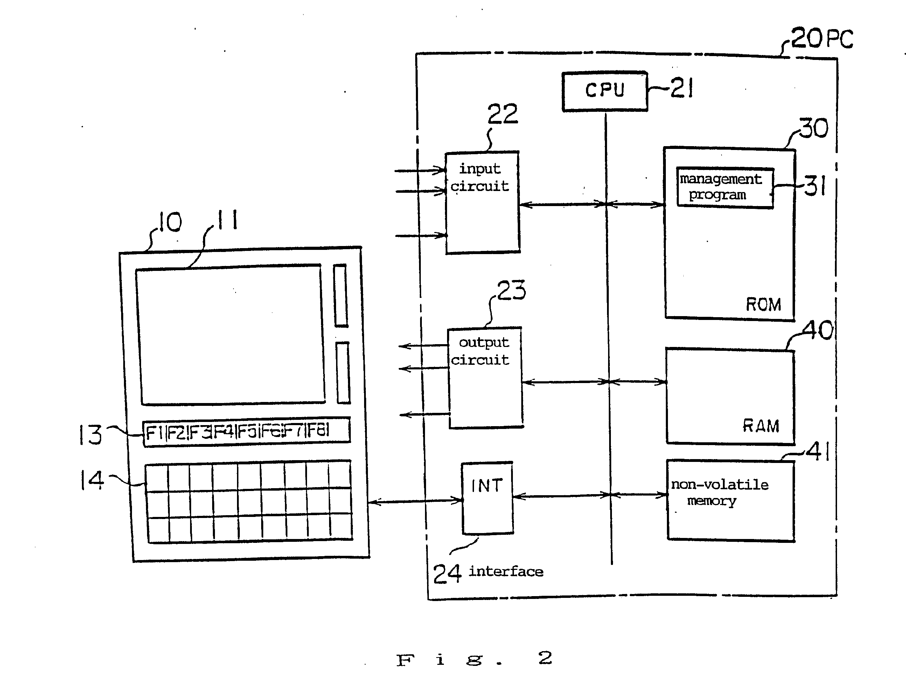

Figure 2 shows a block diagram of hardware as an embodiment of a sequence program edit system according to the present invention, wherein 10 designates an automatic program creation unit including a display unit 11, function keys 13, and operation keys 14. The automatic program creation unit 10 comprises a microprocessor and contains a buffer memory (not shown) for editing a program.

Numeral 20 designates a programmable controller (hereinafter, referred to as PC); 21 designates a processor for controlling the PC 20 as a whole; 22 designates an input circuit for receiving and transmitting an input signal to a bus after changing the signal level thereof; 23 designates an output circuit for an external output of an internal output signal; and 24 designates an interface for the automatic program creation unit 10.

Numeral 30 designates a ROM in which a management program 31 for managing the execution of a user program is stored; 40 designates a RAM in which a sequence program is stored, and in which input signals, output signals, auxiliary relay signals, internal register signals and the like are also stored; and 41 designates a non-volatile memory.

A sequence program is edited by using the function keys 13 and the operation keys 14, and is displayed at the display unit 11 as a ladder diagram. The created sequence program is stored in the RAM 40 through the interface 24.

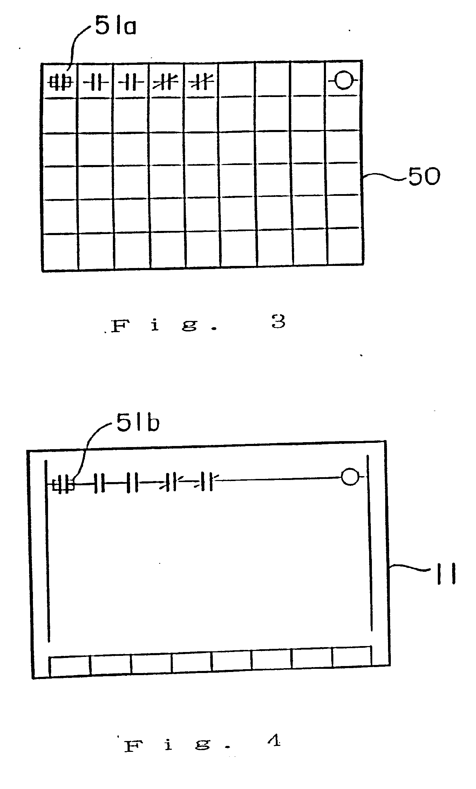

Figure 3 conceptually shows a region 50 of the buffer memory contained in the automatic program creation unit 10 corresponding to one display of the display unit 11, wherein each element is input to a respective small sectional region.

In the present embodiment, a character R designates a relay contact, characters RN designate a not-relay contact, a character C designates a coil, and characters CN designate a not-coil.

When "R3, RN2, and C" are input through the operation keys 14 and a null key is then depressed while cursor is positioned at the upper left corner of the display, three relay contacts and two not-relay contacts 2 are sequentially input from a region 51a of the buffer memory corresponding to the cursor location and a coil is input at the rightmost region of the row as shown in Figure 3.

Figure 4 shows an example of the display at the display unit 11 in which the elements corresponding to the content of the buffer memory of Figure 3 are sequentially displayed from a cursor location 51b.

The spaces between the contacts and the coils are automatically connected by lines, to show these elements as a ladder diagram.

Figure 1 is a flowchart of the above sequence program edit system, wherein numerals prefixed with an "S" indicate the numbers of the steps of the process.

The cursor is moved to a location indicated by a cursor key at step S1, and the elements and the number of elements are input at step S2. Then, the elements of the element number are stored in the respective regions of the buffer memory from the region of the buffer memory corresponding to the cursor location at step S3, and the elements are then read out from the buffer memory and connected by lines, to be displayed as a ladder diagram at the display, at step S4.

As described above, a plurality of elements can be easily input from one cursor location.

Note that, although R, RN, C, and CN are used as the input characters for designating the elements, other inputs may be used. In addition, although the null key is used as the input key, other keys may be used for this purpose.

Further, the present invention is applicable to either a PC contained in a numerical control apparatus or to an independent PC.

As described above, according to the present invention, since a plurality of elements can be easily input without moving the cursor each time an element is to be input, the time required to edit a sequence program is shortened and thus the program costs are reduced.

CLAIMS

1. A sequence program edit system for editing a sequence program by displaying a ladder diagram including elements such as relay contacts, not-relay contacts, coils, and not-coils at a display, comprising the steps of:

moving a cursor to an arbitrary location on said display;

inputting specific characters designating said elements and a number to be input of said elements, through operation keys;

sequentially inputting the number of said elements to be input to the respective regions of a buffer memory from the region of said buffer memory corresponding to said cursor location; and

displaying a ladder diagram composed of said respective elements input to said buffer memory and sequentially connected at said display.

2. A sequence program edit system according to claim 1, wherein the processes of said steps are respectively executed by a programmable controller contained in a numerical control apparatus.

3. A sequence program edit system according to claim 1, wherein the processes of said steps are respectively executed by an independent programmable controller.

start

S 1 — move cursor

S 2 — input elements and number of elements

S 3 — sequentially store

S 4 — display

end

F i g .  1

F i g . 2

EP 0 386 260 A1

Fig. 3

Fig. 4

# INTERNATIONAL SEARCH REPORT

International Application No  PCT/JP89/00837

## I. CLASSIFICATION OF SUBJECT MATTER (if several classification symbols apply, indicate all) 6

According to International Patent Classification (IPC) or to both National Classification and IPC

Int. Cl$^4$    G05B19/04

## II. FIELDS SEARCHED

### Minimum Documentation Searched 7

| Classification System | Classification Symbols |
|---|---|
| IPC | G05B19/04 |

### Documentation Searched other than Minimum Documentation to the Extent that such Documents are Included in the Fields Searched 8

| | |
|---|---|
| Jitsuyo Shinan Koho | 1932 - 1989 |
| Kokai Jitsuyo Shinan Koho | 1971 - 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 63-123103 (Fuji Electric Co., Ltd.) 26 May 1988 (26. 05. 88) (Family: none) | 1 - 3 |
| A | JP, A, 60-17492 (Sharp Corporation) 29 January 1985 (29. 01. 85) (Family: none) | 1 - 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 9, 1989 (09. 10. 89) | October 23, 1989 (23. 10. 89) |
| International Searching Authority | Signature of Authorized Officer |
| Japanese Patent Office | |

Form PCT/ISA/210 (second sheet) (January 1985)